# EUROPEAN PATENT SPECIFICATION

(11) **EP 3 769 447 B1**
(45) Date of publication and mention of the grant of the patent: **20.03.2024**
(21) Application number: 18715006.5
(22) Date of filing: 27.03.2018
(51) Int. Cl.: H04B 10/61, H04B 10/50, H04B 10/64

(54) **OPTICAL RECEIVER AND TRANSMITTER FOR A COHERENT OPTICAL TRANSMISSION SYSTEM**
OPTISCHER EMPFÄNGER UND SENDER FÜR EIN KOHÄRENTES OPTISCHES ÜBERTRAGUNGSSYSTEM
ÉMETTEUR ET RÉCEPTEUR OPTIQUES POUR SYSTÈME DE TRANSMISSION OPTIQUE COHÉRENTE

(43) Date of publication of application: 27.01.2021
(73) Proprietor: HUAWEI TECHNOLOGIES CO., LTD., Shenzhen, Guangdong 518129 (CN)
(72) Inventor: PITTALA, Fabio, 80992 Munich (DE); LE, Nguyen Binh, 80992 Munich (DE); XIE, Changsong, 80992 Munich (DE); KUSCHNEROV, Maxim, 80992 Munich (DE)
(74) Representative: Roth, Sebastian
(86) International application number: PCT/EP2018/057824
(87) International publication number: WO 2019/185128

(56) References cited:
- EP-A1- 2 343 840
- FR-A1- 3 039 947
- US-A1- 2004 258 420
- US-A1- 2009 060 497

## Description

### TECHNICAL FIELD

The invention resides in the field of optical communications, and relates particularly to an optical receiver and an optical system comprising a transmitter and a receiver. Specifically, the invention provides a so-called coherent optical receiver and coherent optical transmitter, which are capable of using a modulation of the frequency and/or phase of an optical carrier signal for transmitting information. Further, the invention also relates to an optical transmission system for high-speed optical communication, and to optical receiving and transmitting methods, respectively.

### BACKGROUND

An example of an optical transmitter transmits information by means of an optical transmission signal, which is generated by modulating the frequency and/or phase of an optical carrier signal with the information. In particular, the optical carrier signal may be provided by the use of a laser, in order to produce an optical transmission signal. An example of an optical receiver uses a local oscillator, for instance implemented by a laser, to produce a local oscillator signal, which is used for downmixing and detecting a received optical transmission signal. Thereby, specifically homodyne or heterodyne detection techniques may be used. The optical transmitter and optical receiver form an optical transmission system.

Coherent (colored) high speed optical transmission systems for 100Gbit/s typically use expensive tunable lasers at the optical transmitter, in order to provide the optical carrier signal. These lasers have the disadvantage that they require a large, costly, hermetic packaging (aka "gold box"), a significant amount of calibration, and use a lot of power due to the thermoelectric cooler (TEC) needed to achieve frequency tuning and wavelength stability. Further, in such an optical transmission system, the laser in the optical transmitter and the laser in the optical receiver need to be aligned with high precision, so that the optical transmission signal can be accurately detected. This makes a particularly complex design of the tunable lasers necessary.

Currently, coherent optical transmission systems are thus used only in long haul and metro networks. However, in the future coherent optical transmission systems will likely replace direct detection systems also for short reach applications, such as 2 km data center networking (DCN), since direct detection systems are inherently limited and presumably cannot scale to 800Gb/s or 1.6Tb/s per fiber (dark fiber / passive application).

For DCN there are also stringent requirements towards lowest power consumption, lowest footprint, and lowest cost for the optical devices used. Therefore, current commercial DCN products still use direct detection systems (100Gb/s), in which a modulated transmitted signal is detected by a diode. The industry is currently working on 100Gb/s per lambda solutions for 2 km applications, but there is a high doubt that direct detection systems will ever scale above 100G/b per lambda, since it would fall prey to fiber impairments, which increase at higher symbol rates. Specifically, polarization-mode dispersion (PMD) and chromatic dispersion (CD) will prohibit an error-free transmission at e.g., 200Gb/s per lambda with direct detection systems, unless major signal processing is introduced. Such signal processing would disadvantageously result in a higher power consumption, and would thus contradict the boundary conditions of DCN applications.

The use of a coherent optical transmission system could in principle deal with CD and PMD. However, for use in DCN, especially the tunable coherent laser of a coherent optical transmission system is for now a prohibitive component, since it is bulky, expensive, power hungry, and fully overdesigned for a simple DCN application, where a maximum of 4-8 wavelengths are transmitted in a wide grid over a single fiber.

FR3039947 A1 discloses a coherent optical receiver capable of receiving a multiple-wavelength optical signal comprising a series of single-band optical bursts, and the detection means to filter at least one beat between a single-band optical burst and one of the optical lines of the local multiple-wavelength optical oscillator in the receiver.

EP 2 343 840 A1 discloses a coherent mixing of the optical signal transmitted over a transmission wavelength and a baseline signal emitted by at least one local oscillator, and a sampling of the signals derived from the coherent mixing, comprising an analog-digital conversion.

### SUMMARY

In view of the above-mentioned problems and disadvantages, the invention aims to provide an enhanced coherent optical transmission system. The invention has the objective to provide an optical receiver and an optical transmitter, which are suited for coherent optical communication in DCN. In particular, the optical transmitter and optical receiver should be cheaper, simpler and smaller than the ones nowadays used in coherent optical transmission systems. At the same time, they should be able to operate with at least the same performance. In particular, the invention aims for an optical receiver and an optical transmitter, which can avoid the use of expensive, large, and power-hungry tunable lasers.

The objective of the invention is achieved by the solution provided in the enclosed independent claims 1, 9 and 10. Advantageous implementations of the invention are further defined in the dependent claims. In the following, parts of the description and drawings referring to embodiments not covered by the claims, are not part of the invention, but are illustrative examples necessary for understanding the invention.

In particular, the invention proposes using a certain local oscillator at the optical receiver or a certain laser at the transmitter, which respectively produce an optical signal (i.e. a local oscillator signal or an optical transmission signal, respectively) comprising a plurality of spaced frequency lines. Using such a local oscillator or laser at one side of the optical transmission system, allows getting rid of a tunable laser and to instead use, for instance, an uncooled, non-hermetically packaged, low power, fixed wavelength laser, without using TECs, at the other side of the optical transmission system. Such a laser is much cheaper, smaller and less power-hungry than the currently used tunable laser. The major challenge is to overcome the temperature-induced wavelength drift of such an uncooled transmitter/receiver laser, which is typically in the order of 0. 1nm/°C. For a temperature range of 15°-55°C in a data center, the temperature-induced wavelength/frequency drift would amount to 4nm/500GHz, which is significantly outside of the detection bandwidth of a typical wide band integrated optical receiver.

A first aspect of the invention provides an optical receiver according to claim 1.

By using the local oscillator producing the plurality of frequency lines, a larger spectral range is covered by the local oscillator signal (than with a single frequency line). Thus, even in case of a frequency shift of the received optical signal, the optical signal overlaps with at least one of the multiple frequency lines. Thus, the optical signal can be detected and downmixed using a standard integrated coherent receiver (ICR) unit and said local oscillator. As a consequence of the multiple frequency lines, the downmixed signal will show the beat products (replicas of the baseband signal), but can be processed for accurately recovering the baseband signal. As a consequence of the above, an expensive and bulky tunable/stabilized laser is not necessary at the optical transmitter, but can be replaced by e.g., an uncooled/unstabilized laser, which is much smaller, less expensive and less power-hungry. Thus, the optical transmitter and optical receiver can form a coherent optical transmission system applicable for DCN. Notably, the transmitter laser may also be a partially tunable or tunable laser, if so desired.

For instance, a frequency comb laser may be used in the optical receiver as the local oscillator. The frequency comb laser may include a sufficient number of frequency lines to detect the optical signal even under the worst case temperature-induced drifts at the optical transmitter. In fact, as many as e.g., 4-80 frequency lines spaced at distance equal or higher than the symbol rate may be provided. The frequency comb laser may be partially or fully tunable.

As mentioned above, for DCN there are stringent requirements towards lowest power consumption, lowest footprint and lowest cost for the optics. In order to enable these requirements, the optical receiver of the first aspect may allow the optical transmitter to use a low power laser source with non-hermetic package, which does not require any power-hungry TEC or extensive calibration, and does not need to be tuned for alignment with the optical receiver, or screened during manufacturing for frequency precision.

In summary, the optical receiver of the first aspect has thus the following advantages. The local oscillator guarantees that even larger drifts of the transmitter laser can be compensated for, even in the case that the drift is much larger than the receiver bandwidth for short reach optical interconnects. Thereby, an optical transmitter with lower power consumption, TEC-free, and without a complex feedback control system is enabled. Advantageously, the optical transmitter may use only uncooled, totally uncalibrated laser components. Further, a transmitter laser with non-hermetic, inexpensive package is enabled.

Further, also the use of coherent lasers with no time consuming factory calibration & high yield of CWDM DFB lasers with large variance of begin of life central frequency and no yield loss due to screening is possible. Finally, small form factor pluggable modules, on board optics or co-packaging with switching ASICs with superior performance, footprint and cost compared to other technologies, are enabled.

In an implementation form of the first aspect, the optoelectronic circuitry is configured to extract, from each of one or more replicas in the downmixed signal, a part of the respective replica, thus obtaining one or more replica parts; and combine the one or more replica parts to recover the baseband signal.

In practice, the extracted part will most often be less than the full replica, i.e. it will be an incomplete part (i.e. a true part) of the replica. This may notably be the case when the received spectral part of the downmixed signal comprises an incomplete part of a first replica and an incomplete part of an adjacent second replica ("adjacent" meaning adjacent in the frequency domain). In this case the two incomplete parts will be complementary to each other. They can therefore be combined to reconstruct the baseband signal. However, it may sometimes happen that the received spectral part contains a replica completely. In this case the extracted part of the replica will be the complete replica, i.e. it will be a complete part.

By means of the post-processing of the downmixed signal, particularly the replicas, in the optoelectronic circuitry, the baseband signal can be accurately recovered. Specifically, even in case of a frequency shift of the received signal.

In a further implementation form of the first aspect, the optoelectronic circuitry is configured to, in order to combine the extracted parts of two adjacent replicas, shift the extracted part of a first replica of the two adjacent replicas by a spacing between two adjacent frequency lines of the local oscillator signal, and add the extracted part of the second replica of the two adjacent replicas to the shifted part of the first replica.

This provides a particularly easy and efficient implementation for recovering the baseband signal from the downmixed signal.

In a further implementation form of the first aspect, the optoelectronic circuitry comprises a pass-band filter and is configured to filter the downmixed signal by the pass-band filter; obtain, for each of said one or more replicas, the extracted part of the respective replica by extracting that part from the filtered downmixed signal.

The pass-band filter may determine the limited receiver bandwidth. Regardless of the frequency offset of the received optical signal and the local oscillator signal, the baseband signal can be accurately recovered.

In a further implementation form of the first aspect, the optoelectronic circuitry is configured to, for extracting a part of a replica, identify the one or more replicas - e.g., by determining a central carrier frequency of each replica.

In a further implementation form of the first aspect, the optoelectronic circuitry includes one or more linear filters to separate the replicas.

By identifying and separating the replicas, the optical receiver is able to accurately recombine parts of different replicas into one completed replica of the baseband signal in the downmixed signal, and thus, to accurately recover the baseband signal.

In a further implementation form of the first aspect, the received optical signal is a single carrier signal or is modulated in an Orthogonal Frequency-Division Multiplexing (OFDM) modulation format, and wherein the optoelectronic circuitry is configured to equalize and synchronize the identified replicas before combining the one or more replica parts.

In general, the approach of the invention is agnostic to the modulation scheme, and may be used with any modulation format. This special configuration allows compatibility with a widely used transmission scheme.

In a further implementation form of the first aspect, a spectral range of the local oscillator signal from the lowest to the highest frequency line equals to or is greater than the sum of a defined maximal frequency variation of a transmitter of the optical signal and of a defined maximal frequency variation of the local oscillator.

Thus, it can be guaranteed that the optical signal received from an optical transmitter overlaps with one or more of the plurality of frequency lines.

In particular, the spectral range of the laser frequency comb is defined by the product of the number of frequency lines of the laser frequency comb with the distance between the frequency lines. The spectral range may be adapted to a certain use case by altering at least one of the two parameters, i.e. number and distance.

In a further implementation form of the first aspect, a spacing between any two adjacent frequency lines of the local oscillator signal is larger than a bandwidth of the received optical signal.

This improves the signal quality of the recovered baseband signal. Avoiding an overlap of replicas also reduces the computational effort needed for reconstruction.

In a further implementation form of the first aspect, the distance between the frequency lines equals at least ten percent of a signal bandwidth.

This allows a good reconstruction of the baseband signal from the replicas. For instance, the distance between the frequency lines may equal at least thirty percent of a bandwidth of the received optical signal. Such provision reduces computing effort and time for reconstruction.

In a further implementation form of the first aspect, a multi-carrier signal with non-orthogonal subbands is provided and wherein the receiver is adapted to access each subband independently regardless of its position in the received spectrum and to recombine the signal without prior synchronization or equalization. Even without prior synchronization or equalization a stable transmission can thus be achieved.

A second aspect of the invention provides an optical transmission system according to claim 9.

The carrier signal including the plurality of spaced frequency lines avoids the need for a tunable and stabilized laser at the optical transmitter. This is due to the fact that even in case of a temperature-induced frequency shift of the receiver laser signal, one or more frequency lines of the optical transmission signal overlap with the receiver laser frequency. Even in case of a (temperature-induced) frequency shift at the optical transmitter, the optical receiver is thus abele to receive the optical transmission signal and recover the baseband signal. Accordingly, the optical transmitter can be constructed much smaller and cheaper. The optical transmission signal will include replica of the baseband signal due to beat products with the multiple frequency lines of the laser. By downmixing the optical transmission signal, and post-processing the downmixed optical transmission signal, particularly the replica of the baseband signal in the downmixed signal, the baseband signal can be recovered. This can be done as explained above for the optical receiver of the first aspect.

The optical transmitter may, for instance, comprise multiple single-wavelength lasers having frequencies which are spaced apart. The frequencies may be equally spaced apart. The optical receiver in this case may comprise a single wavelength laser (non-tunable/partially tunable/fully tunable) as local oscillator, or a frequency comb.

In an implementation form of the second aspect, the optical transmission signal includes multiple replicas of the baseband signal, the repetitions being spaced in frequency according to the spacing of the plurality of frequency lines of the carrier signal.

As mentioned, the optical receiver can, however, recover the baseband signal by post-processing these replica.

In an implementation form of the second aspect, a spacing between any two adjacent frequency lines of the carrier signal is larger than a bandwidth of the baseband signal.

This improves the signal quality of the optical transmission signal.

In a further implementation form of the second aspect, the laser includes a frequency comb laser or multiple single-wavelength lasers.

For instance, the optical transmitter may include multiple transmitter lasers at a certain spacing detected by a single or multiple lasers combs in a single fibre). In this case, each transmitted wavelength may be filtered out before being detected by the laser comb.

A third aspect of the disclosure, not within the scope of the appended claims, provides an optical transmission system, comprising an optical transmitter as described above, an optical receiver as described above.

The optical transmission system may comprise an optical link connecting the optical transmitter and the optical receiver. However, the optical transmitter and optical receiver may also be connected by direct line of sight, i.e. the transmitter sends the laser beam directly over three space to the receiver. In this case there is no dedicated optical link.

The same advantages and modifications as described above for the first and second aspects apply also to the third aspect.

A fourth aspect of the invention provides an optical receiving method according to claim 10.

In an implementation form of the fourth aspect, the method comprises extracting, from each of one or more replicas in the downmixed signal, a part of the respective replica, thus obtaining one or more replica parts; and combine the one or more replica parts to recover the baseband signal.

In a further implementation form of the fourth aspect, the method comprises, in order to combine the extracted parts of two adjacent replicas, shifting the extracted part of a first replica of the two adjacent replicas by a spacing between two adjacent frequency lines of the local oscillator signal, and adding the extracted part of the second replica of the two adjacent replicas to the shifted part of the first replica.

In a further implementation form of the fourth aspect, the method comprises filtering the downmixed signal by a pass-band filter; and obtaining, for each of said one or more replicas, the extracted part of the respective replica by extracting that part from the filtered downmixed signal.

In a further implementation form of the fourth aspect, the method comprises, for extracting a part of a replica, identifying the one or more replicas [e.g., by determining a central carrier frequency of the replica].

In a further implementation form of the fourth aspect, the method comprises using one or more linear filters to separate the replicas.

In a further implementation form of the fourth aspect, the received optical signal is a single carrier signal or is modulated in an Orthogonal Frequency-Division Multiplexing (OFDM) modulation format, and wherein the method comprises equalizing and synchronizing the identified replicas before combining the one or more replica parts.

In a further implementation form of the fourth aspect, a spectral range of the local oscillator signal from the lowest to the highest frequency line equals to or is greater than the sum of a defined maximal frequency variation of a transmitter of the optical signal and of a defined maximal frequency variation of the local oscillator.

In a further implementation form of the fourth aspect, a spacing between any two adjacent frequency lines of the local oscillator signal is larger than a bandwidth of the received optical signal.

The same advantages and effects as described above for the optical receiver of the first aspect apply also to the fourth aspect.

A fifth aspect of the disclosure, not within the scope of the appended claims, provides an optical transmitting method, comprising producing a carrier signal with a plurality of spaced frequency lines, and generating an optical transmission signal by modulating the carrier signal with a baseband signal.

In an implementation form of the fifth aspect, the optical transmission signal includes multiple replicas of the baseband signal, the repetitions being spaced in frequency according to the spacing of the plurality of frequency lines of the carrier signal.

In an implementation form of the fifth aspect, a spacing between any two adjacent frequency lines of the carrier signal is larger than a bandwidth of the baseband signal.

In a further implementation form of the fifth aspect, the carrier signal is produced by a laser, which for instance includes a frequency comb laser or multiple single-wavelength lasers.

The same advantages and effects as described above for the optical transmitter of the second aspect apply also to the fifth aspect.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF THE DRAWINGS

The above described aspects and implementation forms of the invention will be explained in the following description of specific embodiments in relation to the enclosed drawings, in which:
- Fig. 1: shows an optical receiver according to an embodiment of the invention.
- Fig. 2: shows an example of an optical signal without frequency stabilization.
- Fig. 3: shows an example of a local oscillator signal produced at the optical receiver.
- Fig. 4: shows an example of a frequency offset of the optical signal and the local oscillator signal.
- Fig. 5: shows an example of a beating of the optical signal with the local oscillator signal.
- Fig. 6: shows an example of two partial replicas in the downmixed signal arising from a beating of the optical signal with two neighboring frequency lines of the local oscillator signal and falling into a receiver bandwidth, and shows combining the partial replicas into one full replica.
- Fig. 7: shows an optical receiver according to an embodiment of the invention.
- Fig. 8: shows an example of the detection and reconstruction of signals from a not stabilized laser.
- Fig. 9: shows an optical transmitter according to an embodiment of the invention.
- Fig. 10: shows an optical transmitter according to an embodiment of the invention.
- Fig. 11: shows a receiving method according to an embodiment of the invention.
- Fig. 12: shows a transmitting method according to an embodiment of the invention.

### DETAILED DESCRIPTION OF THE EMBODIMENTS

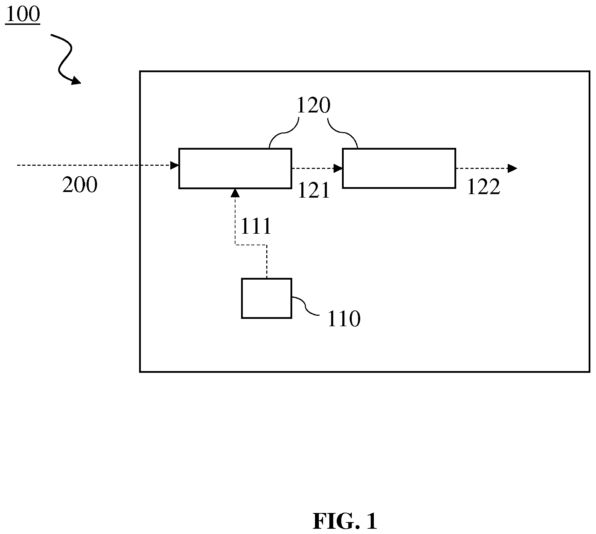

Fig. 1 shows an optical receiver 100 according to an embodiment of the invention. In particular, the optical receiver 100 is suitable for high-speed optical communication.

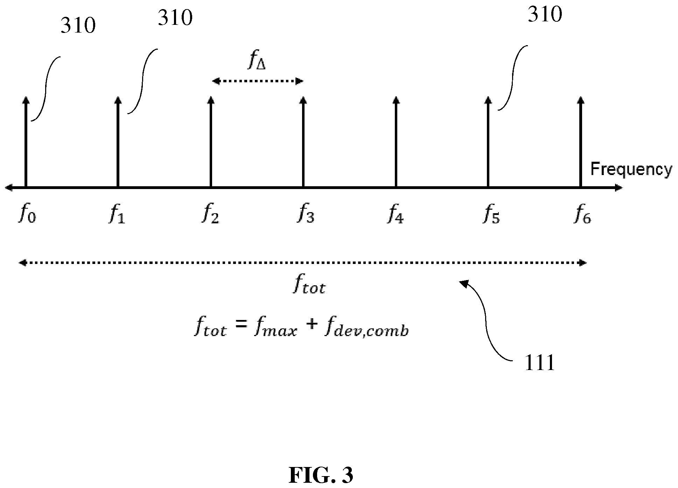

The optical receiver 100 includes a local oscillator 110 configured to produce a local oscillator signal 111 including a plurality of spaced frequency lines 310 (see Fig. 3). The local oscillator 110 may include a frequency comb laser or multiple single-wavelength lasers.

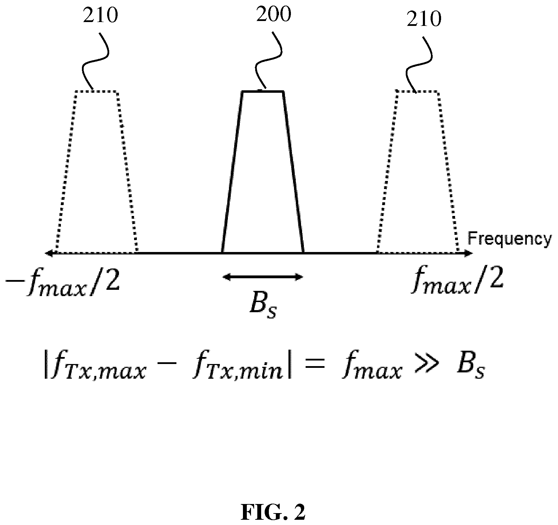

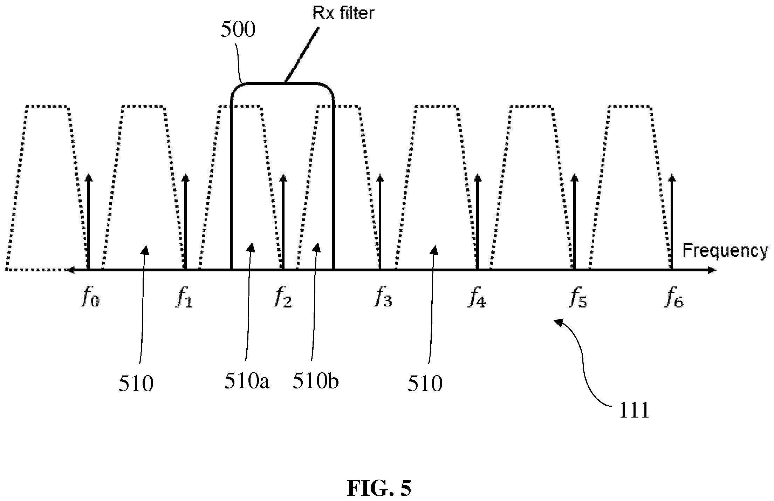

The optical receiver 100 further includes optoelectronic circuitry 120 configured to receive an optical signal 200 (see Fig. 2) modulated with a baseband signal 122. The optoelectronic circuitry 120 is further configured to downmix the optical signal 200 with the local oscillator signal 111 to obtain a downmixed signal 121. The downmixed signal 121 comprises multiple replicas 510 (see Fig. 5) of the baseband signal 122. Each replica is a beat product of the optical signal 200 with one of the frequency lines 310 of the local oscillator signal 111.

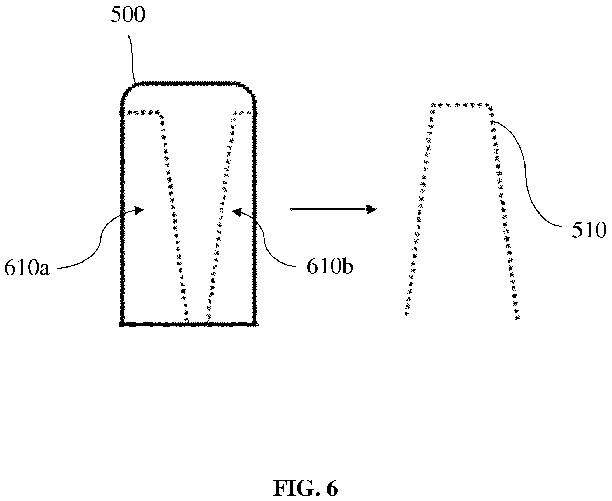

The optoelectronic circuitry 120 is further configured to process the downmixed signal 121 to recover the baseband signal 122. In particular, they optoelectronic circuitry 120 is configured to process the replicas 510 to recover the baseband signal 122. For instance, it can extract multiple replica parts 610 (see Fig. 6) and combine them to recover the baseband signal 122.

Fig. 2 shows an example of an optical signal 200 transmitted by an optical transmitter, and received by the optical receiver 100. The optical signal 200 is produced without frequency stabilization. The optical signal 200 origins e.g., from an unstabilized laser at the optical transmitter. The absolute relative variation of the transmitter frequency fₘₐₓ can be much larger than the signal bandwidth Bs of the optical signal 200. As an example, possible temperature-drifted signals 210 are depicted at ± f_{max/2}.

Fig. 3 shows an example of a local oscillator signal 111, for instance, as generated by a frequency comb laser as the local oscillator 110 of the optical receiver 100. The spacing f_{Δ} between the frequency lines 310 is preferably larger than the signal bandwidth Bs of the received optical signal 200. For the case that f_{Δ} < Bs, the optical signal 200 can still be detected and the baseband signal 122 can be recovered, however, with slightly worse signal quality due to overlapping spectra after downmixing. The local oscillator signal 111 should preferably cover a range fₜₒₜ = fₘₐₓ + f_{dev, comb}, wherein f_{dev, comb} is the variation of the local oscillator 110 in case an unstabilized design is chosen. For a tunable and stabilized local oscillator 110, f_{dev, comb} can become 0. The local oscillator 110 should thus cover a combined range of relative (temperature-induced) drifting between the transmitter laser and the local oscillator signal 111. The spectral lines 310 can be either phase locked or have fully independent phase and frequency variations.

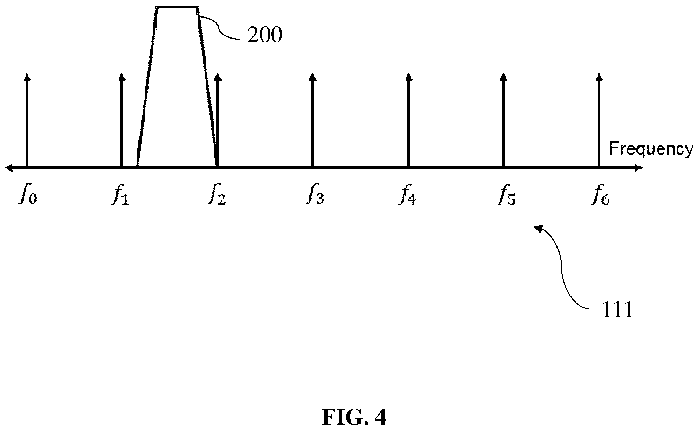

Fig. 4 shows an example of a frequency offset of the optical signal 200 and the local oscillator signal 111 with its multiple frequency lines 310. As illustrated, the transmitted optical signal 200 overlaps arbitrarily with one or more frequency lines 310 of the local oscillator signal 111, for instance, produced by a frequency comb laser.

Fig. 5 shows an example of beat products of the optical signal 200 with the frequency lines 310 of the local oscillator signal 111. Each beat product of the optical signal 200 with one of the frequency lines 310 is a replica 510 of the baseband signal 122. Depending on the absolute offset between the optical signal 200 and the local oscillator signal 111, certain replicas 510, or parts of neighboring replicas 510 (here specifically parts of the replicas denoted with the reference signs 510a and 510b) may fall into a receiver bandwidth defined by a receive filter 500. These replicas 510a, 501b within the receiver bandwidth, respectively the parts of these replicas 510, may be reconstructed to recover the baseband signal 122.

Fig. 6 shows in detail the two parts 610a and 610b of the replicas 510a and 510b of Fig. 5, which fall into the receiver bandwidth. These replicas 510a and 510b originate from beat products of the optical signal 200 and two neighboring frequency lines 310 of the local oscillator signal 111. The parts 610a and 610b of the adjacent replicas 510a and 510b can be recombined, in order to recover the baseband signal 122 in the digital domain - as also shown in Fig. 6. In particular, the optoelectronic circuitry 120 is configured to, in order to combine the parts 610a and 610b of the two adjacent replicas 510a and 510b, to shift e.g., the part 610a by a spacing between the two adjacent frequency lines 310 of the local oscillator signal 111, and then add the other part 610b to the shifted part 610a. In the case of single carrier or an OFDM modulation format, the recombined parts 610a, 610b should be equalized and synchronized before recombination in the spectral domain. In case of a multi-carrier signal with non-orthogonal subbands, each subcarrier can be viewed independently regardless of its position in the receive spectrum and no synchronization or equalization needs to be performed prior to recombining the signal.

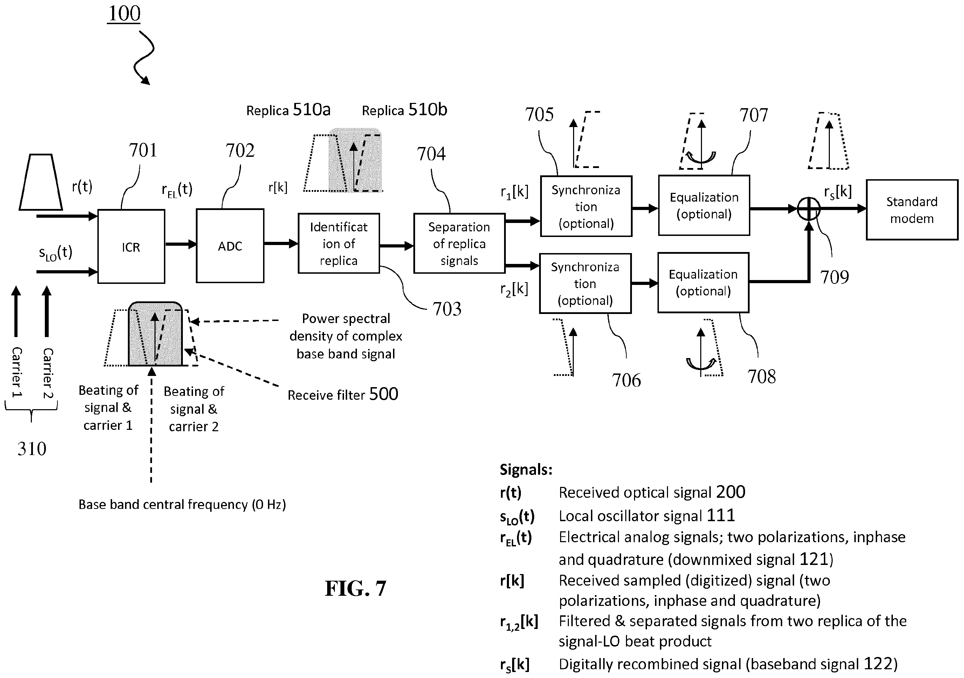

Fig. 7 shows an optical receiver 100 according to an embodiment of the invention, which builds on the optical receiver 100 shown in Fig. 1. Same elements in Fig. 1 and Fig. 7 have the same reference signs and function likewise. The optoelectronic circuitry 120 described with respect to Fig. 1 includes in Fig. 7 an ICR unit 701, an Analog to Digital Converter (ADC) 702, and processing blocks 703 to 708 (e.g., implemented by one or more processors), and a combiner 709.

The optical receiver 100 includes a local oscillator 110, which provides the local oscillator signal 111 including a plurality frequency lines 310 (here frequency lines 310 are labelled "carrier 1" and "carrier 2" as an example). The local oscillator signal 111 is provided to the ICR unit 701, which may be a standard component for coherent detection. The ICR unit 701 also receives the optical signal 200 from the transmitter. The ICR unit 701 downmixes the optical signal 200 with the local oscillator signal 111, and outputs an electrical analog signal having two polarizations (in phase and quadrature) as the downmixed signal 121. The downmixed signal 121 comprises beat products (replica of the power spectral density of the baseband signal 122) of the optical signal 200 and the local oscillator signal 111. Here, as an example a beat product (replica 510a) of the optical signal 200 and carrier 1, and a beat product (510b) of the optical signal 200 and carrier 2. A part of each adjacent replica 510a and 510b falls within a bandwidth of a receive filter 500, wherein the bandwidths of the receive filter 500 is particularly such that the baseband central frequency is centered in it.

This downmixed signal 122 is provided to the ADC 702, which converts it into a digital signal. The digital signal is then fed to block 703, at which the replicas 510a and 510b are identified. In particular, the digital signal is analyzed to identify the central carrier frequencies of the received replicas 510a and 510b.

Then, in block 704, the replicas 510a and 510b are separated. This may, for instance, be done by using linear filters (e.g., low-pass, high-pass or bandpass) to separate the replicas 510a and 510b in frequency. Accordingly, block 704 outputs filtered and separated signals from the two replicas 510a and 510b of the beating of the optical signal 200 and the local oscillator signal 111.

Optionally, a synchronization is then carried out for each of the separated signals in the blocks 705 and 706. In particular, a correction of carrier and clock frequency and phase offsets, e.g., using pilot symbols or other estimation methods, can be carried out. The necessary precision may depend on the choice of the modulation format.

Further, in the blocks 707 and 708, an equalization is optionally performed on the separated signals. For instance, depending on the channel model, the additional equalization may be carried out before recombining the separated signals (in the next block). Equalization may also be performed before the separation into the separated signals related to the different replicas 510a and 510b.

Then, at the combiner 709, the separated signals may be combined. In particular, one of the replica 510a and 510b may be shifted by the frequency spacing between the frequency lines 310, and the two replicas 510a and 510b are then added to another. Thus, the baseband signal 122 can be recovered and further provided, for example, to a standard modem.

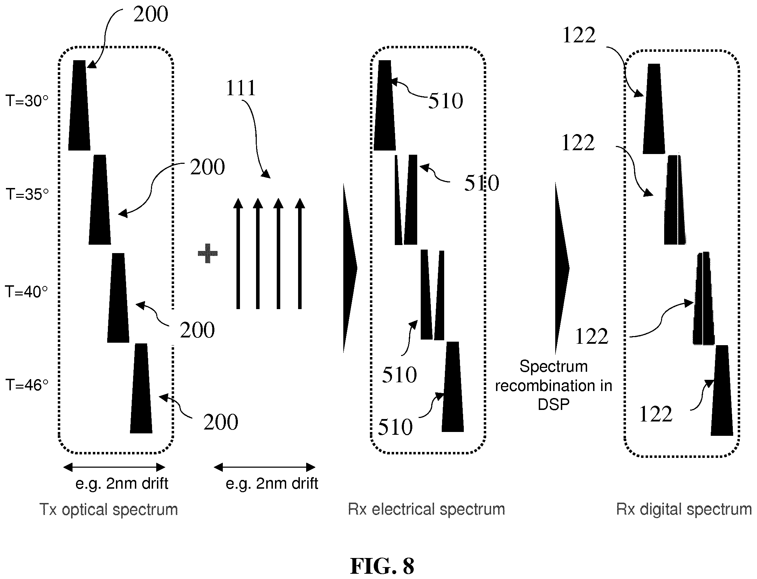

Fig. 8 shows an example of the receiving an optical signal 200 and recovering of the baseband signal 122 from a not stabilized transmitter laser. A comb laser is used as the local oscillator 110 at the optical receiver 100, which particularly includes sufficient carriers (e.g., 4-80) spaced at distances equal or higher than the symbol rate, in order to achieve the overlap of the optical signal 200 and the local oscillator signal 111 even under worst case temperature-induced frequency drifts at the optical transmitter. The detected spectrum will consist of several replicas 510, which can be reconstructed to recover the baseband signal 122.

With regard to Fig. 8, specifically the impact of the temperature-induced frequency drift of the unstabilized laser used by the transmitter is shown, and how signal recombination is still possible at the optical receiver 100. In the left part of Fig. 8, the transmitted optical signals 200 are shown, respectively, at a temperature of 30°C, a temperature of 35°C, a temperature of 40°C and a temperature of 46°C. The signals 200 particularly exhibit a wavelength drift of about 2 nm.

This optical signals 200 received at receiver 100 are downmixed with the laser comb signal 111, which leads to a downmixed signal including replicas 510, respectively. At a transmitter temperature of 30° and 46° a replica 510 falls completely into a detection window (receiver bandwidth of the optical receive filter 500). Thus, no reconstruction is necessary, and the baseband signals 122 can be directly derived. At a transmitter temperature of 35° and 40°, nor replica 510 falls completely into the detection window. Here, certain parts 610 of neighboring replicas 510 fall into the receiver bandwidth as explained above. These parts 610 of the neighboring replicas 510 are combined by post-processing (Digital Signal Processing (DSP), in order to recover the baseband signal 122 as explained above.

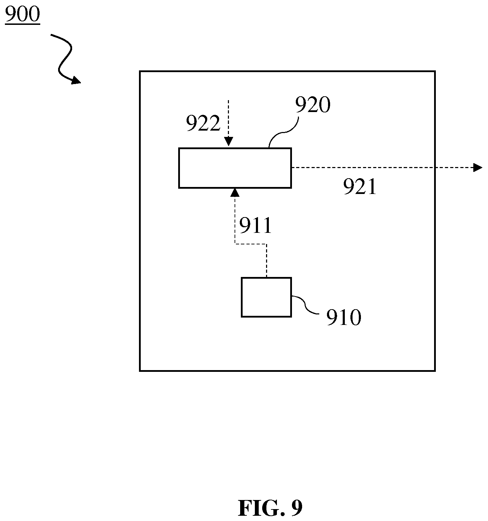

Fig. 9 shows an optical transmitter 900 according to an embodiment of the invention, in particular a coherent optical transmitter for high speed optical communication.

The optical transmitter 900 comprises a laser 910 configured to produce a carrier signal 911 including a plurality of spaced frequency lines. Further, the optical transmitter 900 includes optoelectronic circuitry 920 configured to generate an optical transmission signal 921 by modulating the carrier signal 911 with a baseband signal 922. For instance, the optoelectronic circuitry may comprise an optoelectronic converter.

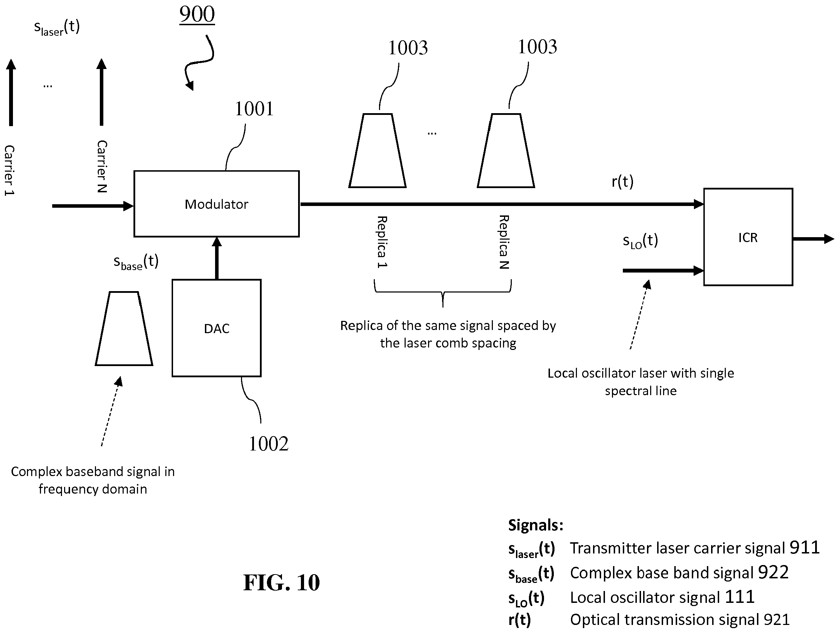

Fig. 10 shows an optical transmitter 900 according to an embodiment of the invention, which builds on the embodiment of the optical transmitter 900 shown in Fig. 9. Same elements in Fig. 9 and Fig. 10 are provided with the same reference signs and function likewise. The optical circuitry 920 described with respect to Fig. 9 includes in Fig. 10 a Digital to Analog Converter (DAC) 1002 and a modulator 1001.

The optical transmitter 900 includes a laser 910, which provides a carrier signal 911 here consisting of a plurality of frequency lines labelled "carrier 1" to "carrier N". The carrier signal 911 is provided to a modulator 1001. The modulator 1001 also receives a digital signal from a DAC 1002. The DAC 1002 converts a baseband signal 922 from the analog to the digital domain.

The modulator 1001 generates an optical transmission signal 921 by modulating the carrier signal 911 with the digital baseband signal 922. The optical transmission signal 921 will include replicas 1003 of the baseband signal 922, which replicas 1003 are spaced by the distance between the frequency lines (carriers) of the carrier signal 911. In this case, the local oscillator at the optical receiver receiving the optical transmission signal 921 may be a laser with a single spectral line. The optical receiver may downmix the optical transmission signal 921 with the local oscillator signal to produce a downmixed signal, and may recover the baseband signal 922 from the downmixed signal by post-processing, particularly by post-processing (identifying, separating, combining etc.) the replicas 1003. This may be as described above for the optical receiver 100 and the replicas 510, respectively.

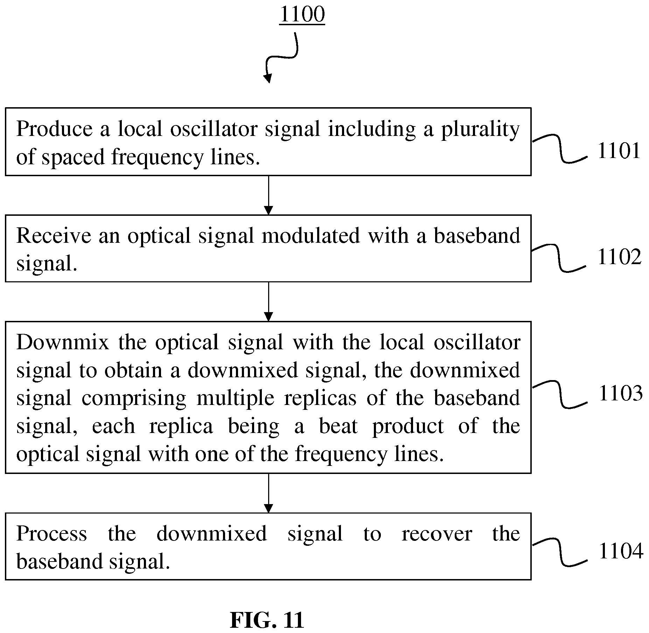

Fig. 11 shows an optical receiving method 1100 according to an embodiment of the invention. The receiving method 1100 may be carried out by the optical receiver 100. The method 1100 comprises a step 1101 of producing 1101 a local oscillator signal 111 including a plurality of spaced frequency lines 310. This step 1101 may be performed by the local oscillator 110. Further, the method comprises a step 1102 of receiving an optical signal 200 modulated with a baseband signal 122, a step 1103 of downmixing the optical signal 200 with the local oscillator signal 111 to obtain a downmixed signal 121, and a step 1104 of processing the downmixed signal 121 to recover the baseband signal 122. The downmixed signal 121 comprise multiple replicas 510 of the baseband signal 122, each replica 510 being a beat product of the optical signal 200 with one of the frequency lines 310. The steps 1102 to 1104 may be performed by the optoelectronic circuitry 1120.

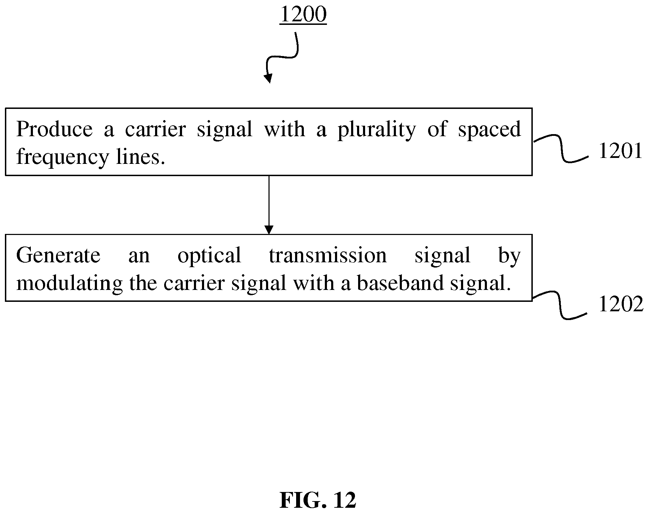

Fig. 12 shows an optical transmitting method 1200 according to an embodiment of the invention. The transmitting method 1200 may be performed by the optical transmitter 900. The method comprises the step 1201 of producing a carrier signal 911 with a plurality of spaced frequency lines, and a step 1202 of generating an optical transmission signal 921 by modulating the carrier signal 911 with a baseband signal 922. The step 1201 may be performed by the laser 910. The step 1202 may be performed by the optoelectronic circuitry 920.

In summary, the invention proposes replacing tunable coherent lasers by inexpensive non-tunable, uncooled, uncalibrated laser diodes on one side of an optical transmission system (transmitter or receiver) by using at the other side of the optical transmission system (receiver or transmitter) a multiple frequency line signal, e.g., produced by a frequency comb laser.

The invention has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. Optical receiver (100), comprising
a local oscillator (110) configured to produce a local oscillator signal (111) including a plurality of spaced frequency lines (310), and
optoelectronic circuitry (120) configured to
receive an optical signal (200) modulated with a baseband signal (122),
downmix the optical signal (200) with the local oscillator signal (111) to obtain a downmixed signal (121), the downmixed signal (121) comprising multiple replicas (510) of the baseband signal (122), each replica (510) being a beat product of the optical signal (200) with one of the frequency lines (310), the optical receiver being **characterised in that**
the optoelectronic circuitry (120) is configured to
extract, from each of two or more replicas (510) in the downmixed signal (121), a part (610) of the respective replica (510), thus obtaining two or more replica parts (610); and
combine the two or more replica parts (610) to recover the baseband signal (122).

2. Optical receiver (100) according to claim 1, wherein
the optoelectronic circuitry (120) is configured to, in order to combine the extracted parts (610a, 610b) of two adjacent replicas (510),
shift the extracted part (610a) of a first replica (510a) of the two adjacent replicas (510) by a spacing between two adjacent frequency lines (310) of the local oscillator signal (111), and
add the extracted part (610b) of the second replica (510b) of the two adjacent replicas (510) to the shifted part (610a) of the first replica (510a).

3. Optical receiver (100) according to claim 1 or 2, wherein
the optoelectronic circuitry (120) comprises a pass-band filter (500) and is configured to
filter the downmixed signal (121) by the pass-band filter (500);
obtain, for each of said two or more replicas (510), the extracted part of the respective replica (510) by extracting that part from the filtered downmixed signal (121).

4. Optical receiver (100) according to one of claims 1 to 3, wherein
the optoelectronic circuitry is configured to, for extracting a part (610) of a replica (510),
identify the two or more replicas (510).

5. Optical receiver (100) according to one of claims 1 to 4, wherein
the optoelectronic circuitry (120) includes one or more linear filters to separate the replicas (510).

6. Optical receiver (100) according to one of claims 4 to 5, wherein the received optical signal (200) is a single carrier signal or is modulated in an Orthogonal Frequency-Division Multiplexing, OFDM, modulation format, and wherein
the optoelectronic circuitry (120) is configured to equalize and synchronize the identified replicas (510) before combining the two or more replica parts.

7. Optical receiver (100) according to one of claims 1 to 6, wherein
a spectral range of the local oscillator signal (111) from the lowest to the highest frequency line (310) equals to or is greater than the sum of a defined maximal frequency variation of a transmitter of the optical signal (200) and of a defined maximal frequency variation of the local oscillator (110).

8. Optical receiver (100) according to one of claims 1 to 7, wherein
a spacing between any two adjacent frequency lines (310) of the local oscillator signal (111) is larger than a bandwidth of the received optical signal (200).

9. Optical transmission system, comprising
an optical transmitter (900), comprising
a laser (910) configured to produce a carrier signal (911) including a plurality of spaced frequency lines, and
optoelectronic circuitry (920) configured to generate an optical transmission signal (921) by modulating the carrier signal (911) with a baseband signal (922), and
an optical receiver (100) according to one of the claims 1 to 8.

10. Optical receiving method (1100), comprising
producing (1101) a local oscillator signal (111) including a plurality of spaced frequency lines (310),
receiving (1102) an optical signal (200) modulated with a baseband signal (122),
downmixing (1103) the optical signal (200) with the local oscillator signal (111) to obtain a downmixed signal (121), the downmixed signal (121) comprising multiple replicas (510) of the baseband signal (122), each replica (510) being a beat product of the optical signal (200) with one of the frequency lines (310), the optical receiving method being **characterised by**
extracting, from each of two or more replicas (510) in the downmixed signal (121), a part (610) of the respective replica (510), thus obtaining two or more replica parts (610), and
combining the two or more replica parts (610) to recover the baseband signal (122).

## Patentansprüche

1. Optischer Empfänger (100), der umfasst
einen lokalen Oszillator (110), der konfiguriert ist, um ein Signal (111) des lokalen Oszillators zu erzeugen, das eine Vielzahl von beabstandeten Frequenzlinien (310) einschließt, und
eine optoelektronische Schaltlogik (120), die konfiguriert ist zum Empfangen eines optischen Signals (200), das mit einem Basisbandsignal (122) moduliert ist,
Heruntermischen des optischen Signals (200) mit dem Signal (111) des lokalen Oszillators, um ein heruntergemischtes Signal (121) zu erhalten, wobei das heruntergemischte Signal (121) eine Mehrzahl von Repliken (510) des Basisbandsignals (122) umfasst, wobei jede Replik (510) ein Schwebungsprodukt des optischen Signals (200) mit einer der Frequenzlinien (310) ist, wobei der optische Empfänger **dadurch gekennzeichnet ist, dass**
die optoelektrische Schaltlogik (120) konfiguriert ist zum
Extrahieren, von jeder von zwei oder mehr Repliken (510) in dem heruntergemischten Signal (121), eines Teils (610) der jeweiligen Replik (510), wodurch zwei oder mehr Replikteile (610) erhalten werden; und
Kombinieren der zwei oder mehr Replikteile (610), um das Basisbandsignal (122) wiederherzustellen.

2. Optischer Empfänger (100) nach Anspruch 1, wobei
die optoelektronische Schaltlogik (120), um die extrahierten Teile (610a, 610b) von zwei angrenzenden Repliken (510) zu kombinieren, konfiguriert ist zum Verschieben des extrahierten Teils (610a) einer ersten Replik (510a) der zwei angrenzenden Repliken (510) durch ein Beabstanden zwischen zwei angrenzenden Frequenzlinien (310) des Signals (111) des lokalen Oszillators und
Hinzufügen des extrahierten Teils (610b) der zweiten Replik (510b) der zwei angrenzenden Repliken (510) zu dem verschobenen Teil (610a) der ersten Replik (510a).

3. Optischer Empfänger (100) nach Anspruch 1 oder 2, wobei
die optoelektronische Schaltlogik (120) ein Bandpassfilter (500) umfasst und konfiguriert ist zum
Filtern des heruntergemischten Signals (121) durch das Bandpassfilter (500); Erhalten, für jede der zwei oder mehr Repliken (510), des extrahierten Teils der jeweiligen Replika (510) durch das Extrahieren dieses Teils von dem gefilterten heruntergemischten Signal (121).

4. Optischer Empfänger (100) nach einem der Ansprüche 1 bis 3, wobei
die optoelektronische Schaltlogik konfiguriert ist, zum Extrahieren eines Teils (610) einer Replik (510), um die zwei oder mehr Repliken (510) zu identifizieren.

5. Optischer Empfänger (100) nach einem der Ansprüche 1 bis 4, wobei
die optoelektronische Schaltlogik (120) ein oder mehrere lineare Filter einschließt, um die Repliken (510) zu trennen.

6. Optischer Empfänger (100) nach einem der Ansprüche 4 bis 5, wobei das empfangene optische Signal (200) ein einzelnes Trägersignal ist oder in einem orthogonalen Frequenzmultiplexmodulationsformat, OFDM-Modulationsformat, moduliert wird und wobei
die optoelektronische Schaltlogik (120) konfiguriert ist, um die identifizierten Repliken (510) zu entzerren und zu synchronisieren, vor dem Kombinieren der zwei oder mehr Replikteile.

7. Optischer Empfänger (100) nach einem der Ansprüche 1 bis 6, wobei
ein Spektralbereich des Signals (111) des lokalen Oszillators von der niedrigsten zu der höchsten Frequenzlinie (310) gleich oder höher als die Summe einer definierten maximalen Frequenzvariation eines Senders des optischen Signals (200) und einer definierten maximalen Frequenzvariation des lokalen Oszillators (110) ist.

8. Optischer Empfänger (100) nach einem der Ansprüche 1 bis 7, wobei
ein Abstand zwischen beliebigen zwei angrenzenden Frequenzlinien (310) des Signals (111) des lokalen Oszillators größer als eine Bandbreite des empfangenen optischen Signals (200) ist.

9. Optisches Sendesystem, das umfasst
einen optischen Sender (900), der umfasst
einen Laser (910), der konfiguriert ist, um ein Trägersignal (911), das eine Vielzahl von beabstandeten Frequenzlinien einschließt, zu erzeugen und
die optoelektronische Schaltlogik (920), die konfiguriert ist, um ein optisches Sendesignal (921) durch ein Modulieren des Trägersignals (911) mit einem Basisbandsignal (922) herzustellen und
einen optischen Empfänger (100) nach einem der Ansprüche 1 bis 8.

10. Optisches Empfangsverfahren (1100), das umfasst
Erzeugen (1101) eines Signals (111) des lokalen Oszillators, das eine Vielzahl von beabstandeten Frequenzlinien (310) einschließt,
Empfangen (1102) eines optischen Signals (200), das mit einem Basisbandsignal (122) moduliert ist,
Heruntermischen (1103) des optischen Signals (200) mit dem Signal (111) des lokalen Oszillators, um ein heruntergemischtes Signal (121) zu erhalten, wobei das heruntergemischte Signal (121) die Mehrzahl von Repliken (510) des Basisbandsignals (122) umfasst, wobei jede Replik (510) ein Schwebungsprodukt des optischen Signals (200) mit einer der Frequenzlinien (310) ist, wobei der optische Empfänger **gekennzeichnet ist durch**
Extrahieren, von jeder von zwei oder mehr Repliken (510) in dem heruntergemischten Signal (121), eines Teils (610) der jeweiligen Replik (510), wodurch zwei oder mehr Replikteile (610) erhalten werden und
Kombinieren der zwei oder mehr Replikteile (610), um das Basisbandsignal (122) wiederherzustellen.

## Revendications

1. Récepteur optique (100), comprenant
un oscillateur local (110) configuré pour produire un signal d'oscillateur local (111) comportant une pluralité de lignes de fréquence espacées (310), et
une circuiterie optoélectronique (120) configurée pour
recevoir un signal optique (200) modulé avec un signal de bande de base (122), effectuer un mixage réducteur du signal optique (200) avec le signal d'oscillateur local (111) pour obtenir un signal à mixage réducteur (121), le signal à mixage réducteur (121) comprenant de multiples répliques (510) du signal de bande de base (122), chaque réplique (510) étant un produit de battement du signal optique (200) avec une des lignes de fréquence (310), le récepteur optique étant
**caractérisé en ce que**
la circuiterie optoélectronique (120) est configurée pour
extraire, de chacune de deux répliques ou plus (510) dans le signal à mixage réducteur (121), une partie (610) de la réplique respective (510), obtenant ainsi deux ou plusieurs parties de réplique (610) ; et
combiner les deux parties de réplique ou plus (610) pour récupérer le signal de bande de base (122).

2. Récepteur optique (100) selon la revendication 1, dans lequel
la circuiterie optoélectronique (120) est configurée pour, afin de combiner les parties extraites (610a, 610b) de deux répliques adjacentes (510),
décaler la partie extraite (610a) d'une première réplique (510a) des deux répliques adjacentes (510) par un espacement entre deux lignes de fréquence (310) adjacentes du signal d'oscillateur local (111), et
ajouter la partie extraite (610b) de la seconde réplique (510b) des deux répliques adjacentes (510) à la partie décalée (610a) de la première réplique (510a).

3. Récepteur optique (100) selon la revendication 1 ou 2, dans lequel
la circuiterie optoélectronique (120) comprend un filtre de bande passante (500) et est configurée pour
filtrer le signal à mixage réducteur (121) par le filtre de bande passante (500) ;
obtenir, pour chacune desdites deux répliques ou plus (510), la partie extraite de la réplique respective (510) en extrayant cette partie du signal à mixage réducteur filtré (121).

4. Récepteur optique (100) selon l'une des revendications 1 à 3, dans lequel
la circuiterie optoélectronique est configurée pour, en vue de l'extraction d'une partie (610) d'une réplique (510),
identifier les deux répliques ou plus (510).

5. Récepteur optique (100) selon l'une des revendications 1 à 4, dans lequel
la circuiterie optoélectronique (120) comporte un ou plusieurs filtres linéaires pour séparer les répliques (510).

6. Récepteur optique (100) selon l'une des revendications 4 à 5, dans lequel le signal optique reçu (200) est un signal porteur unique ou est modulé dans un format de modulation de multiplexage par répartition orthogonale de la fréquence, OFDM, et dans lequel
la circuiterie optoélectronique (120) est configurée pour égaliser et synchroniser les répliques identifiées (510) avant de combiner les deux parties de réplique ou plus.

7. Récepteur optique (100) selon l'une des revendications 1 à 6, dans lequel
une plage spectrale du signal d'oscillateur local (111) de la ligne de fréquence (310) la plus basse à la plus élevée est égale ou supérieure à la somme d'une variation de fréquence maximale définie d'un émetteur du signal optique (200) et d'une variation de fréquence maximale définie de l'oscillateur local (110).

8. Récepteur optique (100) selon l'une des revendications 1 à 7, dans lequel
un espacement entre deux quelconques lignes de fréquence (310) adjacentes du signal d'oscillateur local (111) est plus grand qu'une largeur de bande du signal optique reçu (200).

9. Système de transmission optique, comprenant
un émetteur optique (900), comprenant
un laser (910) configuré pour produire un signal porteur (911) comportant une pluralité de lignes de fréquences espacées, et
une circuiterie optoélectronique (920) configurée pour générer un signal de transmission optique (921) en modulant le signal porteur (911) avec un signal de bande de base (922), et
un récepteur optique (100) selon l'une des revendications 1 à 8.

10. Procédé de réception optique (1100), comprenant
la production (1101) d'un signal d'oscillateur local (111) comportant une pluralité de lignes de fréquence (310) espacées,
la réception (1102) d'un signal optique (200) modulé avec un signal de bande de base (122),
le mixage réducteur (1103) du signal optique (200) avec le signal d'oscillateur local (111) pour obtenir un signal à mixage réducteur (121), le signal à mixage réducteur (121) comprenant de multiples répliques (510) du signal de bande de base (122), chaque réplique (510) étant un produit de battement du signal optique (200) avec une des lignes de fréquence (310), le procédé de réception optique étant **caractérisé par**
l'extraction, de chacune de deux répliques ou plus (510) dans le signal à mixage réducteur (121), d'une partie (610) de la réplique respective (510), obtenant ainsi deux ou plusieurs parties de réplique (610), et
la combinaison des deux parties de réplique ou plus (610) pour récupérer le signal de bande de base (122).
